# EUROPÄISCHE PATENTANMELDUNG

(11) **EP 1 081 929 A2**
(43) Veröffentlichungstag der Anmeldung: **07.03.2001**
(21) Anmeldenummer: 00118091.8
(22) Anmeldetag: 23.08.2000
(51) Int. Cl.: H04M 3/51

(54) **Verfahren und Schaltungsanordnung zum Betreiben eines Call-Centers**

(30) Priorität: 31.08.1999 DE 29916713 U; 28.09.1999 DE 19946356; 18.03.2000 DE 10013605
(71) Anmelder: Tenovis GmbH & Co. KG, 60362 Frankfurt (DE)
(72) Erfinder: Wiese, Garrelt, 64297 Darmstadt (DE); Weirauch, Andreas, 80686 München (DE)
(74) Vertreter: Bohnenberger, Johannes, Dr.

(57) **Zusammenfassung**

Die Erfindung betrifft ein Verfahren und eine Schaltungsanordnung zum Betreiben eines Call-Centers, wobei ein Verwaltungsprogramm des Call-Centers mit einem Eingangs-Netzknoten verbunden ist und an dem Eingangs-Netzknoten ein- beziehungsweise ausgehende Verbindungen mit dem Call-Center zugeordneten Endgeräten durch das Verwaltungsprogramm überwacht und gemakelt werden.

Es ist vorgesehen, daß die Endgeräte (Call-Center-Agenten) (22) sich direkt beim Verwaltungsprogramm anmelden und ein Verbindungsobjekt (28) übergeben und hierauf vom Verwaltungsprogramm (16) jeweils ein Verbindungsüberwachungsobjekt (30) erhalten.

## Beschreibung

Die Erfindung betrifft ein Verfahren und eine Schaltungsanordnung zum Betreiben eines Call-Centers, wobei das Verwaltungsprogramm des Call-Centers mit einem Eingangs-Netzknoten verbunden ist und an dem Eingangs-Netzknoten ein- beziehungsweise ausgehende Verbindungen mit dem Call-Center zugeordneten Call-Center-Agenten durch das Verwaltungsprogramm gemakelt und überwacht werden.

### Stand der Technik

Es ist bekannt, Call-Center mit einem Verwaltungsprogramm zu makeln und zu überwachen, das mit einer Vermittlungsanlage (Gatekeeper) verbunden ist, an der die Call-Center-Agenten angeschlossen sind. Alle Verbindungen werden durch das Verwaltungsprogramm über einen Eingangs-Netzknoten des Call-Centers über die Vermittlungsanlage vermittelt, geroutet beziehungsweise überwacht. Das Verwaltungsprogramm ist mit der Vermittlungsanlage über eine Schnittstelle verbunden, die mittels eines CSTA-Protokolls arbeitet. Über ein derartiges meldungsorientiertes Protokoll kommuniziert das Verwaltungsprogramm über die Vermittlungsanlage mit dem Eingangs-Netzknoten (Gateway) und dem Call-Center-Agenten. Die Vermittlungsanlage übernimmt, analog aus der Telefontechnik bekannter ISDN-Vermittlungsanlagen oder analoger Vermittlungsanlagen den Aufbau von eingehenden beziehungsweise ausgehenden Verbindungen beziehungsweise von Verbindungen von Call-Center-Agenten untereinander.

Bei einer derartigen Strukturierung des Call-Centers ist nachteilig, daß durch die Verwendung meldungsorientierter Protokolle, wie beispielsweise CSTA oder TAPI, aufwendige Programmsteuerungen notwendig sind, die für unterschiedliche Anwendungen unterschiedliche Programmierungen erfordern und somit schwer standardisierbar sind.

Es setzt weiterhin voraus, daß der gesamte Meldungsverkehr zwischen den Kommunikationsendpunkten zum Zwecke der Verbindungsüberwachung über die Vermittlungsanlage stattfindet, was aus Gründen des Durchsatzes und der Ausfallsicherheit nachteilig ist.

### Vorteile der Erfindung

Durch das Verfahren zum Betreiben eines Call-Centers mit den im Anspruch 1 genannten Merkmalen und die Schaltungsanordnung mit den im Anspruch 2 genannten Merkmalen wird es vorteilhaft möglich, den Programmierungsaufwand erheblich zu reduzieren und unterschiedliche Anwendungen unter einem einheitlichen Protokoll zu standardisieren. Dadurch, daß der Eingangs-Netzknoten und die Call-Center-Agenten sich direkt beim Verwaltungsprogramm anmelden und jeweils ein zugeordnetes Verbindungsobjekt übergeben, und hierauf vom Verwaltungsprogramm ein Verbindungsüberwachungsobjekt erhalten, wird erreicht, daß das Verwalten des Call-Centers direkt durch das Verwaltungsprogramm erfolgt. Die Zwischenschaltung einer vermittlungsanlage (Gatekeeper) wird nicht notwendig. Mit den hiermit möglichen Einsparungen einer Hardwarekomponente ist der Programmierungs- und Standardisierungsaufwand eines derartigen Verwaltens eines Call-Centers wesentlich vereinfacht.

Zudem wird durch den Wegfall des Vermittlungssystems der Durchsatz sowie die Ausfallsicherheit entscheidend verbessert.

Bevorzugte Ausgestaltungen der Erfindung ergeben sich aus den in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: die Architektur eines Call-Centers gemäß dem Stand der Technik;
- Figur 2: die erfindungsgemäße Architektur eines Call-Centers und
- Figur 3: schematisch den Kommunikationsaufbau zwischen einem Verwaltungsprogramm und einem Agenten des Call-Centers.

### Beschreibung des Ausführungsbeispiels

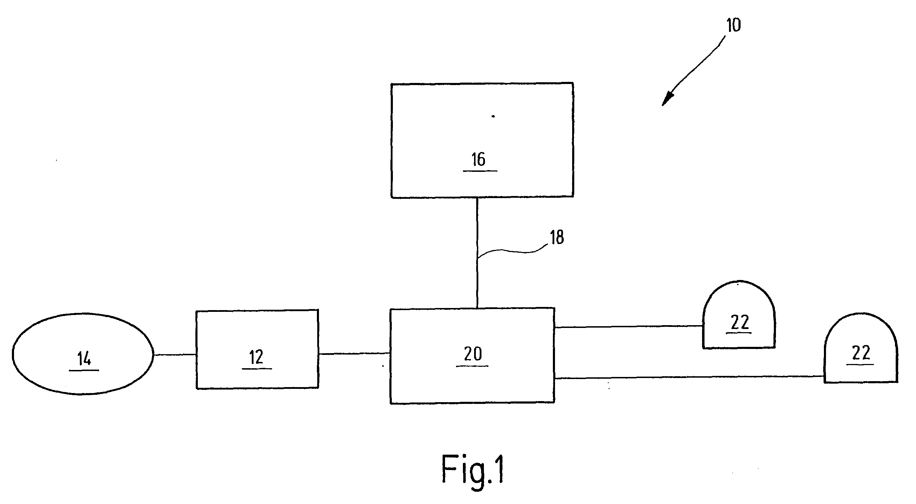

Figur 1 zeigt in einem Blockschaltbild die Architektur eines Call-Centers 10 gemäß dem Stand der Technik. Das Call-Center 10 ist über einen Eingangs-Netzknoten 12 mit einem Telekommunikationsnetz 14 verbunden. Das Telekommunikationsnetz 14 ist beispielsweise ein leitungsgebundenes Netz (beispielsweise ISDN oder analog) oder ein Funknetz. Die Verwaltung des Call-Centers 10, insbesondere das Aufbauen ein- beziehungsweise abgehender Verbindungen, das Überwachen dieser Verbindungen und das interne Umleiten dieser Verbindungen, erfolgt über ein Verwaltungsprogramm 16. Das Verwaltungsprogramm 16 ist über eine Schnittstelle 18 mit einer Vermittlungsanlage 20 verbunden. Die Schnittstelle 18 arbeitet beispielsweise nach dem CSTA-Protokoll. Die Vermittlungsanlage 20 ist einerseits mit dem Eingangs-Netzknoten 12 (Gateway) verbunden. Andererseits sind an die Vermittlungsanlage 20 die Call-Center-Agenten 22 angeschlossen. Die Call-Center-Agenten 22 sind beispielsweise sogenannte IP(Voice over Internet-Telefony)-Endgeräte oder Voice over IP-fähige Arbeitsplatzrechner.

Anhand der schematischen Darstellung in Figur 1 wird deutlich, daß alle Verbindungen innerhalb des Call-Centers 10 über die Vermittlungsanlage 20 (Gatekeeper) geroutet werden müssen. Über den Zugriff des Verwaltungsprogrammes 16 auf den Gatekeeper 20 kann diese die einzelnen Verbindungen überwachen und eingehende Verbindungen an freie Agenten 22 durchschalten. Ebenso können Verbindungen unter wenigstens zwei Agenten 22 durch das Verwaltungsprogramm 16 über den Gatekeeper 20 geschaltet werden.

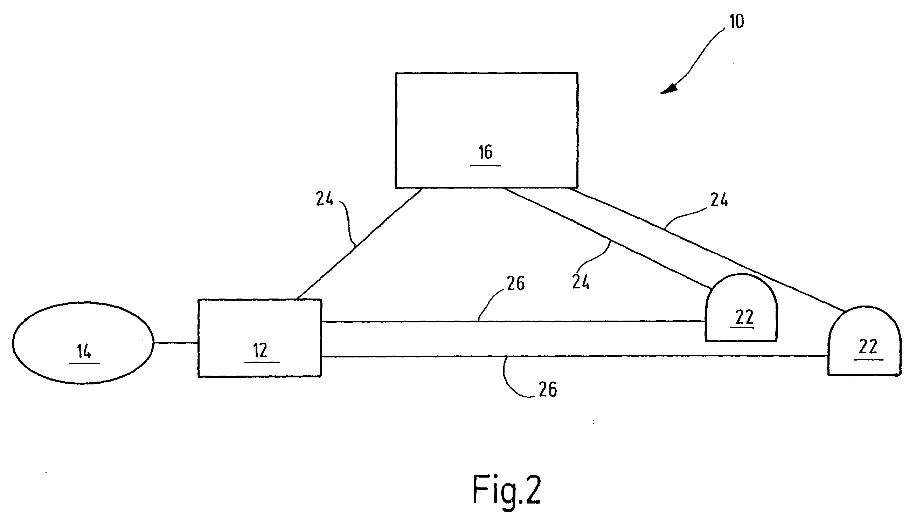

Die Darstellung in Figur 1 erfolgt lediglich, um anhand der nachfolgenden Darstellung in Figur 2 den wesentlichen Unterschied zu der erfindungsgemäßen Struktur eines Call-Centers 10 zu verdeutlichen.

Figur 2 zeigt ebenfalls in einem Blockschaltbild ein Call-Center 10 mit der erfindungsgemäßen Struktur, wobei gleiche Teile wie in Figur 1 mit gleichen Bezugszeichen versehen und nicht nochmals erläutert sind.

Anhand der Darstellung in Figur 2 wird deutlich, daß das Verwaltungsprogramm 16 einerseits direkt mit dem Eingangs-Netzknoten 12 und andererseits mit den Call-Center-Agenten 22 verbunden ist. Die Call-Center-Agenten 22 wiederum sind direkt mit dem Eingangs-Netzknoten 12 verbunden. Die Anordnung einer zusätzlichen Vermittlungsanlage (Gatekeeper) 20 entfällt. Die Verbindungen 24 zwischen dem Verwaltungsprogramm 16 und dem Eingang des Kunden 12 beziehungsweise des Agenten 22 werden über Referenz gesteuerte Verfahren aufgebaut beziehungsweise gehalten. Derartige referenzgesteuerte Verfahren (RPC(Remote Procedure Call)-Verbindungen) basieren darauf, daß ein Partner, hier der Eingangs-Netzknoten 12 beziehungsweise die Agenten 22, einem zweiten Partner, hier dem Verwaltungsprogramm 16, eine Referenz übergeben, die beinhaltet, daß sie zum Aufbau und Halten von Verbindungen bereit sind, und der zweite Partner, hier das Verwaltungsprogramm 16, aufgrund der empfangenen Referenz ein Verbindungsüberwachungsobjekt dem ersten Knoten, hier dem Eingangs-Netzknoten 12 und den Agenten 22, übermittelt. Durch einen derartigen Verbindungsaufbau ist das Verwaltungsprogramm 16 immer über den aktuellen Verbindungszustand der Agenten 22 und des Eingangs-Netzknotens 12 informiert und kann über das Verbindungsüberwachungsobjekt die Agenten 22 und den Eingangs-Netzknoten 12 quasi fernsteuern. Dies beinhaltet den Aufbau über den Eingangs-Netzknoten 12 eingehender Verbindungen, das Halten dieser Verbindungen, den Aufbau von über den EingangsNetzknoten 12 ausgehender Verbindungen sowie das Makeln von Verbindungen der Agenten 22 untereinander. Selbstverständlich können auch bestehende Verbindungen durch das Verwaltungsprogramm 16 auf diesem Wege abgebrochen werden.

Dadurch, daß das Verwaltungsprogramm 16 über die Verbindungen 24 zu den Agenten 22 ständig darüber informiert ist, welcher der Agenten 22 gerade eine Verbindung 26 zu dem Telekommunikationsnetzwerk 14 über den Eingangs-Netzknoten 12 hält, kann bei eingehenden neuen externen Verbindungen eine Zuordnung zu einem freien Agenten 22 erfolgen. Durch das beim Verbindungsaufbau zwischen dem Verwaltungsprogramm 16 und den Agenten 22 übersandte Verbindungsüberwachungsobjekt hat das Verwaltungsprogramm 16 stets einen aktuellen Überblick über die eingegangenen Verbindungen.

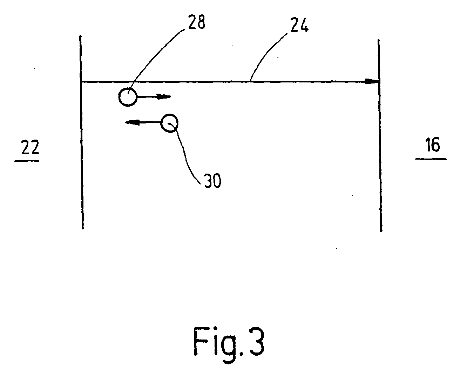

Figur 3 soll nochmals schematisch den Aufbau und das Halten der Verbindung 24 zwischen dem Verwaltungsprogramm 16 und einem Call-Center-Agenten 22 verdeutlichen. Der Call-Center-Agent 22 meldet die Verbindung 24 beim Verwaltungsprogramm 16 an und übersendet gleichzeitig ein Verbindungsobjekt 28. Das Verwaltungsprogramm 16 quittiert den Empfang des Verbindungsobjektes 28 und übergibt dem Call-Center-Agenten 22 ein Verbindungsüberwachungsobjekt 30, das die bereits erläuterte Überwachung und Verwaltung des Call-Centers 10 gestattet.

## Patentansprüche

1. Verfahren zum Betreiben eines Call-Centers, wobei ein Verwaltungsprogramm des Call-Centers mit einem Eingangs-Netzknoten verbunden ist und an dem Eingangs-Netzknoten ein- beziehungsweise ausgehende Verbindungen mit dem Call-Center zugeordneten Endgeräten durch das Verwaltungsprogramm überwacht und gemakelt werden, **dadurch gekennzeichnet**, daß die Endgeräte (Call-Center-Agenten) (22) sich direkt beim Verwaltungsprogramm anmelden und ein Verbindungsobjekt (28) übergeben und hierauf vom Verwaltungsprogramm (16) jeweils ein Verbindungsüberwachungsobjekt (30) erhalten.

2. Schaltungsanordnung zum Betreiben eines Call-Centers, das über einen Eingangs-Netzknoten (12) mit einem Telekommunikationsnetz (14) verbindbare Endgeräte (22) umfaßt, **dadurch gekennzeichnet**, daß ein Verwaltungsprogramm (16) des Call-Centers (10) einerseits direkt mit dem Eingangs-Netzknoten (12) und andererseits direkt mit den Endgeräten (22) verbunden ist.

3. Schaltungsanordnung nach Anspruch 2, **dadurch gekennzeichnet**, daß die Verbindungen (24) zwischen dem Verwaltungsprogramm (16) und dem Eingangs-Netzknoten (12) und den Agenten (22) jeweils durch eine RPC (Remote Procedure Call)-Schnittstelle realisiert sind.
